# EUROPEAN PATENT SPECIFICATION

(11) **EP 1 382 214 B1**
(45) Date of publication and mention of the grant of the patent: **31.05.2006**
(21) Application number: 02728813.3
(22) Date of filing: 16.04.2002
(51) Int. Cl.: H04Q 7/24, H04L 12/56, H04L 12/28

(54) **BINDING INFORMATION FOR IP MEDIA FLOWS**
BINDUNGSINFORMATION FÜR IP MEDIENDATENSTRÖMEN
INFORMATIONS DE LIAISON POUR FLUX DE MEDIA IP

(30) Priority: 17.04.2001 US 284358 P; 04.03.2002 US 91047
(43) Date of publication of application: 21.01.2004
(73) Proprietor: Cingular Wireless II, LLC, Wilmington, Newcastle, DE (US)
(72) Inventor: SHIEH, Hugh, H., Sammamish, WA 98075 (US)
(74) Representative: Hoarton, Lloyd Douglas Charles
(86) International application number: PCT/US2002/012181
(87) International publication number: WO 2002/085055

(56) References cited:
- WO-A-00/10357
- WO-A-99/05828
- SINNREICH H ET AL: "INTERDOMAIN IP COMMUNICATIONS WITH QOS, AUTHORIZATION AND USAGE REPORTING" INTERNET DRAFT, XX, XX, February 2000 (2000-02), pages 1-67, XP002939495
- MARSHALL ET AL: "SIP Extensions for Media Authorization" INTERNET DRAFT, [Online] February 2001 (2001-02), XP002217605 Retrieved from the Internet: <URL:http://www.watersprings.org/pub/id/dr aft-ietf-sip-call-auth-01.txt> [retrieved on 2002-10-22] cited in the application

## Description

### TECHNICAL FIELD

The present invention relates to a binding mechanism for packet media flows. In one embodiment, the binding mechanism uses an authorization token and one or more flow identifiers to identify one or more media flows of a session for authorization.

### BACKGROUND

In the last ten years, the number of cellular devices used by the public has exploded. Mobile telephones are commonplace, and personal digital assistants ["PDAs"] and laptop computers with wireless capability are increasingly popular. Cellular devices are used for browsing the World Wide Web, one-way and two-way audio and video communication, instant messaging, and transmitting and receiving other types of multimedia information as well.

Over the same period, the Internet has grown tremendously. In the early 1990's, the Internet was typically used for email, text communication, or file transfer. Today, the Internet is still used for these purposes, but it is also used for one-way audio and video streaming, two-way audio and video communication, multimedia browsing, and messaging.

The Internet is an example of a packet-switched network. Whatever kind of information is sent over the Internet, the information is transmitted in packets. In general, a packet has 1) a header with addresses of the sender and destination for the packet and 2) a data payload portion with a chunk of the information. Packets are routed from computer to computer within the Internet to get from the sender to the destination. Internet Protocol ["IP"] is a set of rules for transmitting packets over the Internet. Various versions of IP have been developed, as have other packet data protocols.

The Internet offers several advantages as a telecommunications network. It spans the globe and includes redundancy to compensate for equipment failure. It operates with a variety of different types of networks and end user equipment.

On the other hand, several traits of the Internet make it unsuitable for certain applications. Conventionally, delivery of packets over the Internet happens according to a best effort model. A routing computer (i.e., router) routes packets as best it can, but sometimes gets overwhelmed with the amount of traffic. At such times, delivery of packets can be delayed or packets can get dropped. For applications such as email this is not really a problem, because delivery time is not critical and packets can be re-transmitted. For other applications, however, delay and discontinuity are more problematic. Audio telephony and videoconferencing have limits on the amount of delay that is acceptable for communication. Audio and video streaming have less stringent limits, but also can suffer from delay and discontinuity. The best effort model of the Internet hinders the development of audio, video, and other IP multimedia applications that have higher quality of service ["QoS"] requirements. In addition, Internet users are typically charged a flat access fee unrelated to how many packets the user transmits or receives over the Internet. People using the Internet for email can thus be charged disproportionately compared to people using the Internet for IP multimedia applications. Moreover, people who would pay more for higher QoS do not have that option.

Some recent developments have focused on how to take advantage of the good features of the Internet while addressing the traits that make it unsuitable for applications with higher QoS requirements. Other developments have focused on QoS in mobile telecommunications networks and end-to-end QoS for devices that communicate across both mobile telecommunications and packet-switched networks.

### I. Session Initiation and Description Protocols

Session Initiation Protocol ["SIP"] is a set of rules for creating, modifying and terminating sessions with one or more participants. These sessions include Internet multimedia conferences, Internet telephone calls and multimedia distribution. SIP is mainly used for signaling information about sessions, and operates on top of lower-level protocols that control things such as routing of packets.

A SIP message can carry a session description, for example, according to Session Description Protocol ["SDP"], which allows participants to agree about the media flows for the session. A SDP description includes a session-level description (with details that apply to the session and the media streams) and zero or more media-level descriptions (with details that apply to a single media stream). The session-level description includes information like session name (identified by a line beginning with "s=" in the SDP description), and can also include connection information ("c="), bandwidth information ("b="), and other information. A media-level description ("m=") includes information such as media type (e.g., video, audio), transport protocol, and format (e.g., MPEG video). A media-level description can also include connection information, bandwidth information, and other information.

SIP supports user mobility by proxying and redirecting requests to the user's current location. For example, a user can register his current location with a SIP proxy, which acts as an intermediary for the user for SIP signalling.

SIP has been extended to support call authorization using user agents ["UAs"] and SIP proxies. UAs (e.g., cellular devices of users) are considered untrusted. For a UA-initiated call, a SIP proxy authorizes media data to/from the UA. The SIP proxy supplies a media authorization token to the UA. When the UA is ready to exchange a media data with another endpoint, the UA requests bandwidth using the media authorization token it received from its SIP proxy.

For more information about SIP and SDP, see Request for Comment ["RFC"] 2543 and RFC 2327 from the Internet Engineering Task Force ["IETF"]. For the SIP extension described above, see the IETF Internet Draft entitled "SIP Extensions for Media Authorization," version 1.

### II. Next Generation Internet Architectures

To address concerns with QoS over the Internet, various architectures have been researched which change the traditional best effort model of the Internet. These next generation architectures include the Integrated Services in the Internet Architecture ["IntServ"] and the Architecture for Differentiated Services ["DiffServ"].

IntServ defines a set of extensions to the traditional best effort model of the Internet. In the IntServ architecture, a setup mechanism is used to convey information to routers so that the routers can provide requested services to flows that require the services. Resource Reservation Protocol ["RSVP"] is one setup mechanism. With RSVP, a host requests a specific QoS from the network for a particular data flow. The network responds by admitting or rejecting the request. For admitted requests, the appropriate routers are configured to provide the QoS. For additional information about IntServ and RSVP, see RFC 1633, RFC 2205, and related specifications.

In the DiffServ architecture, packets are classified into one of multiple aggregated flows or "classes." A packet header includes a DiffServ codepoint ["DSCP"] indicating the class of the packet. A network node at the edge of the DiffServ network (i.e., a DiffServ edge node) can place an appropriate DSCP in the packet header. Based on the DSCP, a DiffServ router can apply different packet forwarding treatment to the packet for the next hop in the DiffServ network. For additional information about DiffServ, see RFC 2474, RFC 2475, and related specifications.

To address concerns about charging for Internet usage, various authorization and charging architectures have been explored. Different architectures charge by Internet usage (e.g., traffic and/or connection time), mobile telecommunications network usage, session or media flow. In various applications, charging by session and flow offers the advantages of simplicity to the end user and flexibility in pricing packages for different networks. For additional information, see the relevant specifications by the IETF and the 3^{rd} Generation Partnership Project ["3GPP"].

### III. End-to-End QoS

When information flows over the Internet between two cellular devices, end-to-end QoS can depend on the Internet QoS as well as the QoS for the mobile telecommunications networks (e.g., Global System for Mobile Communication ["GSM"] or Universal Mobile Telecommunications System ["UMTS"] network) between the Internet and the cellular devices.

The 3GPP has organized numerous specifications relating to mobile telecommunications networks QoS and end-to-end QoS. 3^{rd} Generation Technical Specification ["3G TS"] 23.060 v3.6.0 describes packet services that use a Packet Data Protocol ["PDP"] like IP over a mobile telecommunications network. 3G TS 23.107 v4.0.0 describes a QoS framework for UMTS networks. 3G TS 23.207 v1.2.0 describes a framework for end-to-end QoS and adresses how to map QoS requirements between different networks.

### A. Bearer Services

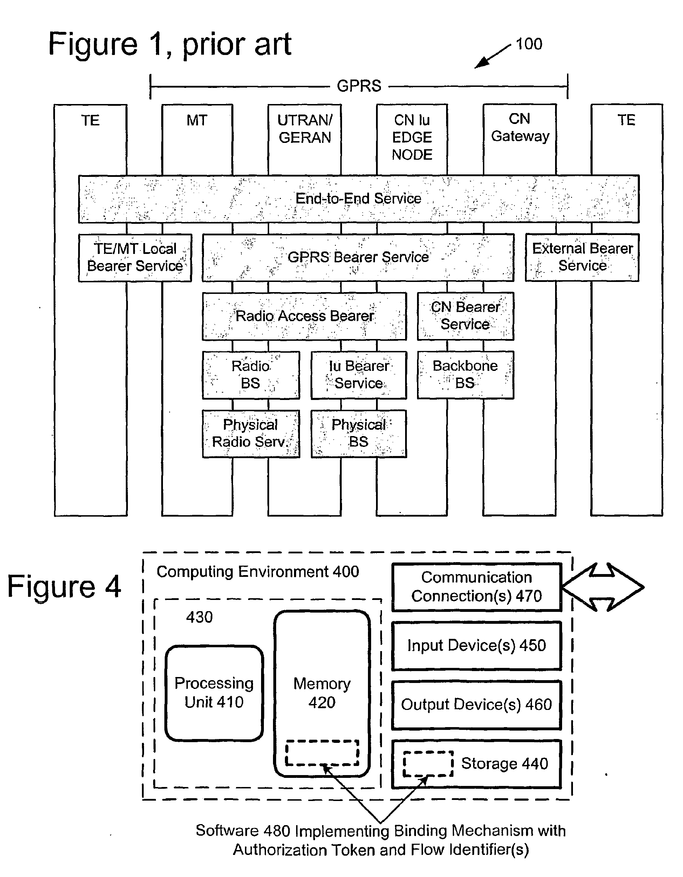

In general, to realize a certain QoS over a network, a bearer service ["BS," "bearer," or "service"] with defined characteristics and functionality is set up from the source to the destination of the service over the network. A bearer service includes aspects that enable the provision of a contracted QoS, for example, control signalling, user plane transport, and QoS management functionality. Figure 1 shows a bearer service layered architecture (100) according to the prior art. A bearer service on a specific layer uses services provided by the layers below and offers services to the layers above. Other architectures lack one or more of the services shown in Figure 1, use a different configuration of services, or use different services. For additional information about Figure 1 and the services and components referenced therein, see 3G TS 23.207 v1.2.0, 3G TS 23.107 v4.0.0, and related specifications.

### B. Example Network Architecture

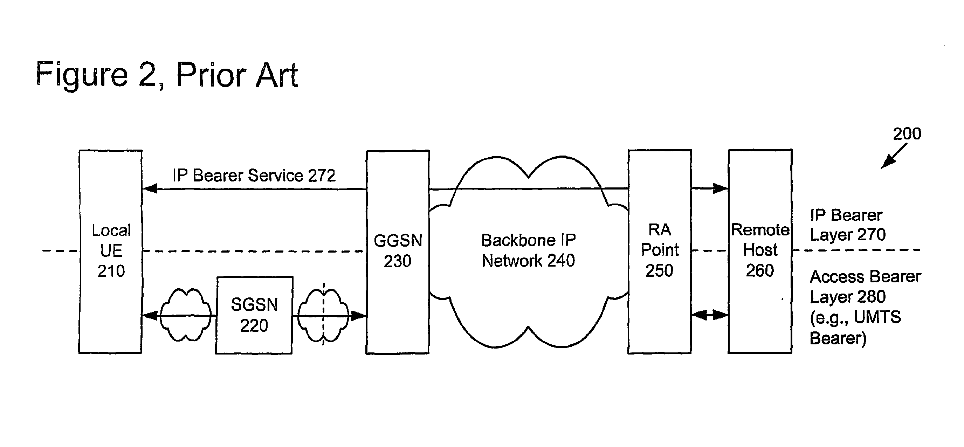

Figure 2 shows a simplified example of a network architecture (200) according to the prior art. Other network architectures are possible. The architecture (200) includes a UMTS network using a general packet radio service ["GPRS"] and a backbone IP network (240) (e.g., the Internet).

In Figure 2, the local user equipment ["UE"] (210) is, for example, a cellular device such as a mobile telephone or computer with wireless transmission capability. The serving GPRS support node ["SGSN"] (220) and the gateway GPRS support node ["GGSN"] (230) contain functionality to support GPRS for mobile telecommunications networks, and can be in the same or different network nodes. The SGSN (220) communicates, for example, by wireline channel with a base station that in turn communicates by radio transmission with the UE (210). The GGSN (230) routes packets (e.g., providing DiffServ Edge, IntServ/RSVP signaling, or other functions) between the UMTS network and the backbone IP network (240).

The IP Bearer Layer (270) includes an IP Bearer Service (272) for providing a contracted QoS from the UE (210) to the remote host (260), spanning the UMTS network and the backbone IP network (240). The Access Bearer Layer (280) includes bearer services underneath the IP Bearer Layer (270), for example, a UMTS Bearer Service for providing a contracted QoS between the UE (210) and the GGSN (230). Figure 2 abstracts away the details of the remote access point (250) and access bearer service between the backbone IP network (240) and the remote host (260), which can mirror the UE (210) side or be different.

The UE (210) has one or more PDP (e.g., IP) addresses, which can be statically or dynamically assigned. One or more PDP contexts are set up across the PDP context bearer (e.g., the GPRS over the UMTS network). For example, with a PDP Context Activation request, the UE (210) requests a packet service with a specified QoS for a PDP address from a Access Point Name ["APN"]. The APN refers to an external packet data network and/or a service, and can be used in mapping the request to a GGSN. The requested QoS can be specified with a QoS profile.

A QoS profile is a set of attributes specifying the service for a network such as a UMTS network. 3G TS 23.107 v4.0.0 describes four different UMTS QoS traffic classes, which differ mainly in how delay sensitive the traffic is. In addition to traffic class, a user of the bearer can specify other attributes for the service provided by the network, including maximum bitrate, guaranteed bitrate, and transfer delay.

**Table 1: UMTS QoS traffic classes in TS 23.107 v4.0.0**

| **Class** | **Intended Use** |
|---|---|
| conversational | Very delay-sensitive traffic such as audio and video telephony. |
| streaming | Non-conversational traffic, which are less delay-sensitive than audio and video telephony. |
| interactive | Interactive applications like WWW browsing and instant messaging. |
| background | Delay-insensitive traffic such as background file or email downloading. |

The SGSN (220) and the GGSN (230) can modify the requested QoS according to a subscriber profile, current resources, or other criteria. The UE (210) can request additional PDP contexts at the same or different QoS over the PDP context bearer. The UE (210) can also modify certain attributes of existing PDP contexts (e.g., with a PDP Context Modification request). In some circumstances, the GGSN or other network entities can activate or modify contexts.

For additional information about Figure 2, the service and components referenced therein, other network architectures, PDP, QoS profiles, and QoS for UMTS networks, see 3G TS 23.207 v1.2.0, 3G TS 23.107 v4.0.0, 3G TS 23.060 v3.6.0, and related specifications.

### C. Policy Enforcement and QoS Inter-Working

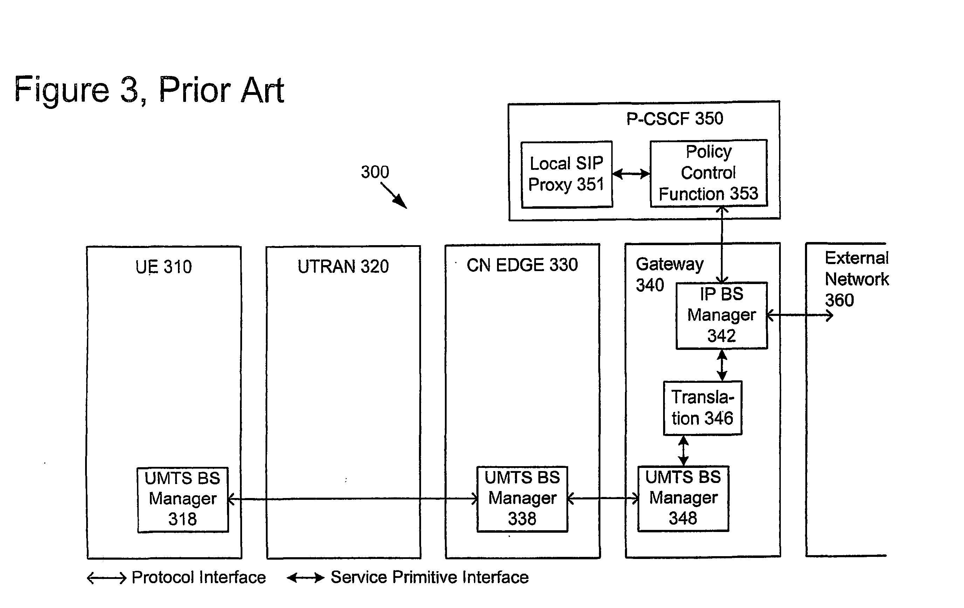

Figure 3 shows a framework (300) with QoS management functions for end-to-end IP QoS according to the prior art. At a high level, Figure 3 shows UE (310), a UTRAN (320) such as a network of cellular base stations, a CN EDGE (330) such as a SGSN, a gateway (340) such as a GGSN, a proxy - call session control function ["P-CSCF"] (350), and an external network (360). For the sake of simplicity, Figure 3 does not show lower layer bearer service functions.

In Figure 3, the gateway (340) includes an IP BS manager (342), a translation (346) function, and a UMTS BS manager (348). The IP BS manager (342) manages the inter-working with the external network (360), using mechanisms such as DiffServ Edge, RSVP/IntServ signaling, policy control, or service agreement functions. The IP BS manager (342) communicates with the UMTS BS manager (348) through the translation (346) function, which provides the inter-working between the mechanisms and parameters (e.g., QoS parameters) of the UMTS bearer service and those of the IP bearer service. Other frameworks are possible, for example, those including an IP BS manager and translation function in the UE (310), or those using other mechanisms for inter-working between networks.

The framework (300) can be used for policy-based admission control, in which a policy control function ["PCF"] (353) makes decisions in regard to network-based IP policy using policy information and rules. Policy information elements include, for example, addresses and authorized QoS for the IP flows of a session. The PCF (353) communicates policy information to the IP BS manager (342) in the gateway (340) across an interface. For IP Multimedia and other services, service-based local policy ["SBLP"] decisions can be applied to a bearer. SBLP decisions involve interaction between the UE(310), the gateway (340), and the P-CSCF (350).

In addition to the PCF (353), the P-CSCF (350) includes a local SIP proxy (351), which is used for SIP signaling and obtaining a SDP description of a session. The P-CSCF (350) and PCF(353) have several roles, including authorizing QoS resources for the session described in the SDP description. The P-CSCF (350)/PCF (353) can generate an authorization token for a SIP session and send the authorization token to the UE (310) by SIP message. The authorization token, for example, conforms to the IETF specification on SIP Extensions for Media Authorization.

The UE (310) makes resource reservation requests that the gateway (340) matches with authorizations from the PCF (353). For example, the UE (310) includes the authorization token in PDP Context Activation or Modification requests along with UMTS QoS parameters. The authorization token can then be used to correlate the requests with the authorizations from the PCF (353).

The gateway (340) is the IP policy enforcement point and has several roles. It controls acess to QoS for flow(s) of IP packets. Policy information is either "pushed" to the gateway (340) by the PCF (353) or requested from the PCF (353) by the gateway (340). The gateway (340) also provides flow control/gating functionality, and takes action when the IP packets for a flow exceed authorization.

For additional information about Figure 3 and the service and components referenced therein, see 3G TS 23.207 v1.2.0 and related specifications.

In general, per-flow authorization gives finer control over authorization, QoS management, and charging than per-session authorization, which in turn has advantages compared to network-level authorization alone. The authorization token generated during SIP signaling, however, is inadeqaute for individually identifying multiple different flows of a session for authorization.

The patent application published as International Publication Number WO 00/10357 describes transmitting data packets in multiple data flows to/from a mobile station in a mobile communications system. Multiple profiles are associated with a data transmission path, each profile comprising at least one QoS parameter. Each flow or data packet is provided with a profile tag indicating one of the multiple profiles. Scheduling and policing the transmission of individual data packets is based on at least one QoS parameter of the profile indicated by the profile tag associated with the data flow in question.

### SUMMARY

The present invention relates to a binding mechanism for packet media flows. The binding mechanism uses an authorization token and packet media flow identifiers to identify packet media flows of a session for authorization. This provides the advantages of using a per-session authorization token while also allowing resource authorization and allocation on the basis of individual packet media flows of the session. The binding mechanism includes various aspects.

According to a first aspect, an apparatus transmits one or more messages including binding information for authorizing one or more packet media flows of a session. The binding information includes an authorization token that, when combined with a packet media flow identifier, is sufficient to identify a packet media flow of the session. For example, a UE transmits one or more PDP context requests including binding information. The binding information includes a SIP media authorization token and one or more IP media flow identifiers.

According to a second aspect, a network node processes binding information for authorizing one or more packet media flows of a session. The binding information includes an authorization token. The network node interprets each of one or more packet media flow identifiers relative to the authorization token to identify a packet media flow of the session. For example, binding information includes a SIP media authorization token and one or more IP media flow identifiers.

Additional features and advantages of the invention will be made apparent from the following detailed description of described embodiments that proceeds with reference to the accompanying drawings.

### BRIEF DESCRIPTION OF THE DRAWINGS

Figure 1 is a diagram of a bearer service layered architecture according to the prior art.
Figure 2 is a diagram of a simplified example of a network architecture according to the prior art.
Figure 3 is a diagram illustrating QoS management functions for end-to-end IP QoS according to the prior art.
Figure 4 is a block diagram of a suitable computing environment in which described embodiments may be implemented.
Figures 5 and 6 are flowcharts of techniques for a binding mechanism using an authorization token and IP media flow identifier(s).

### DETAILED DESCRIPTION

Described embodiments of the present invention are directed to a binding mechanism for authorizing QoS requested for one or more IP media flows of a session. Binding information transmitted from UE to a GGSN includes a SIP media authorization token. The GGSN interprets one or more IP media flow identifiers relative to the SIP media authorization token to identify the one or more IP media flows of the session. In terms of transmission bandwidth, computational complexity, and signaling complexity, using a per-session authorization token is more efficient than using a different authorization token per IP media flow of the session. At the same time, using multiple IP media flow identifiers in conjunction with the per-session authorization token provides a simple mechanism for resource authorization and allocation on the basis of individual IP media flows of the session.

In the described embodiments, the binding mechanism includes several techniques and systems. While the techniques and systems are typically described herein as part of a single, integrated framework, the techniques and systems can be applied separately, potentially in combination with other techniques and systems.

In the described embodiments, the binding mechanism is part of a system that complies with a variety of technical specifications, including most notably 3G TS 23.207, but also including 3G TS 23.107, 3G TS 23.060, and the IETF Internet Draft entitled "SIP Extensions for Media Authorization." In alternative embodiments, the binding mechanism works in other systems and/or with other protocols.

Table 2 lists some acronyms and abbreviations used in the present application.

**Table 2: Acronyms and abbreviations**

| **Short Form** | **Full Term** |
|---|---|
| 3G TS | 3^{rd} Generation Technical Specification |
| 3GPP | 3^{rd} Generation Partnership Project |
| APN | Access Point Name |
| BS | Bearer Service |
| DiffServ | Architecture for Differentiated Services |
| DSCP | DiffServ Codepoint |
| GGSN | Gateway GPRS Support Node |
| GPRS | General Packet Radio Service |
| GSM | Global System for Mobile Communication |
| IETF | Internet Engineering Task Force |
| IntServ | Integrated Services in the Internet Architecture |
| IP | Internet Protocol |
| P-CSCF | Proxy - Call Session Control Function |
| PCF | Policy Control Function |
| PDA | Personal Digital Assistant |
| PDP | Packet Data Protocol |
| QoS | Quality of Service |
| RFC | Request for Comment |
| RSVP | Resource Reservation Protocol |
| SBLP | Service-based Local Policy |
| SDP | Session Description Protocol |
| SGSN | Serving GPRS Support Node |
| SIP | Session Initiation Protocol |
| UA | User Agent |
| UE | User Equipment |
| UMTS | Universal Mobile Telecommunications System |
| UTRAN | UMTS Terrestrial Radio Access Network |

### I. Computing Environment

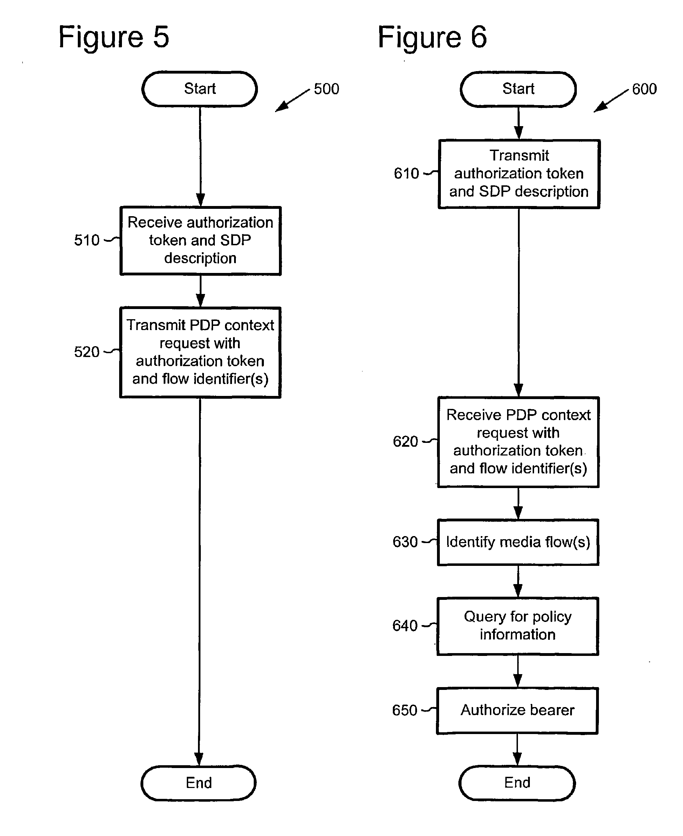

Figure 4 illustrates a generalized example of a suitable computing environment (400) in which the described embodiments may be implemented. The computing environment (400) is not intended to suggest any limitation as to scope of use or functionality of the invention. The present invention may be implemented in diverse general-purpose or special-purpose computing environments such as cellular devices or other user equipment, or GGSN or other network nodes.

With reference to Figure 4, the computing environment (400) includes at least one processing unit (410) and memory (420). In Figure 4, this most basic configuration (430) is included within a dashed line. The processing unit (410) executes computer-executable instructions and may be a real or a virtual processor. In a multi-processing system, multiple processing units execute computer-executable instructions to increase processing power. The memory (420) may be volatile memory (e.g., registers, cache, RAM), non-volatile memory (e.g., ROM, EEPROM, flash memory, etc.), or some combination of the two. The memory (420) stores software (480) implementing the binding mechanism with an authorization token and flow identifier(s).

A computing environment may have additional features. For example, the computing environment (400) includes storage (440), one or more input devices (450), one or more output devices (260), and one or more communication connections (470). An interconnection mechanism (not shown) such as a bus, controller, or network interconnects the components of the computing environment (400). Typically, operating system software (not shown) provides an operating environment for other software executing in the computing environment (400), and coordinates activities of the components of the computing environment (400).

The storage (440) may be removable or non-removable, and includes magnetic disks, magnetic tapes or cassettes, CD-ROMs, CD-RWs, DVDs, or any other medium which can be used to store information and which can be accessed within the computing environment (400). The storage (440) may store computer-executable instructions for the software (480) implementing the binding mechanism with an authorization token and flow identifier(s).

The input device(s) (450) may be a touch input device such as a numerical keypad, keyboard, mouse, pen, or trackball, a voice input device, a scanning device, or another device that provides input to the computing environment (400). The output device(s) (460) may be a display, printer, speaker, CD-writer, or another device that provides output from the computing environment (400).

The communication connection(s) (470) enable communication over a communication medium to another computing entity. The communication medium conveys information such as computer-executable instructions, audio or video information, or other data in a modulated data signal. A modulated data signal is a signal that has one or more of its characteristics set or changed in such a manner as to encode information in the signal. By way of example, and not limitation, communication media include wired or wireless media implemented with a radio frequency, electrical, optical, infrared, acoustic, or other carrier.

The invention can be described in the general context of computer-readable media. Computer-readable media are any available media that can be accessed within a computing environment. By way of example, and not limitation, with the computing environment (400), computer-readable media include memory (420), storage (440), communication media, and combinations of any of the above.

The invention can be described in the general context of computer-executable instructions, such as those included in program modules, being executed in a computing environment on a target real or virtual processor. Generally, program modules include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing environment.

For the sake of presentation, the detailed description uses terms like "request," "generate," and "modify" to describe computer operations in a computing environment. These terms are high-level abstractions for operations performed by a computer, and should not be confused with acts performed by a human being. The actual computer operations corresponding to these terms vary depending on implementation.

### II. Binding Mechanism

A binding mechanism described herein associates a PDP context bearer with policy information in a GGSN to support SBLP enforcement and QoS inter-working. The policy information in the GGSN is based on IP media flows. The binding mechanism identifies the IP media flow(s) associated with a PDP context bearer and uses this identification information in selecting the policy information to apply.

For the binding mechanism, binding information (e.g., an authorization token and flow identifier(s)) provided by a UE is sufficient to identify the IP media flow(s) carried on a PDP context. The binding mechanism provides a simple mechanism that allows for resource authorization and allocation on the basis of IP media flows while retaining a single authorization token in SIP signaling and PDP context activation/modification messages. This achieves the advantages of using a single per-session authorization token and the advantages of per-flow resource authorization and allocation.

For the policy information, for example, the P-CSCF/PCF uses an SDP description of a session to calculate authorization for the session, including restrictions on IP resources, IP packet flows, and (potentially) IP destinations. An authorized session may include one or more flow authorizations, with each flow authorization containing an IP flow 5-tuple (i.e., source address and port, destination address and port, protocol) for the flow, a specification of authorized resources for the flow, and a DSCP that identifies an assigned DiffServ per hop behavior for the flow.

IP policy enforcement is based on IP media flows, while UMTS bearers are based on PDP contexts from a UE to a GGSN. When a PDP context is activated or modified and SBLP is in effect, the GGSN uses policy information associated with IP media flows to authorize the bearer. The UE controls the mapping of IP media flows to PDP contexts, and the UE provides the GGSN with binding information to allow it to correctly identify the policy information for PDP context activation/modification request messages. Otherwise, the GGSN will not have sufficient information to identify the policy information needed to authorize the bearer.

The IETF SIP Working Group has considered using an authorization token per IP media flow in an SDP description, which could then be provided by the UE to the GGSN as binding information. While architecturally correct, this approach requires changing SDP and sending more information between the PCF, GGSN, and UE.

In contrast, for the binding mechanism described herein, IP media flows are identified by their order in an SDP description. For example, the first media flow (identified by a line beginning with "m=" in the SDP description) is flow 1, the second media flow is flow 2, etc. Since both the P-CSCF/PCF and UE have the SDP description, they will identify flows in a consistent manner. Authorization information from the P-CSCF/PCF and binding information from the UE can both identify the media flow or flows.

Figures 5 and 6 show techniques (500, 600) for a binding mechanism using an authorization token and IP media flow identifier(s). Figures 5 and 6 generally illustrate the timing for the binding mechanism; the actual timing depends on the underlying protocols (e.g., SIP and PDP), network, etc.

With reference to Figures 5 and 6, during SIP signaling, the P-CSCF/PCF transmits (610) an authorization token and SDP description to the UE. The UE receives (510) the authorization token and SDP description.

The UE then transmits (520) a PDP context request. When activating/modifying a PDP context, the UE includes the authorization token as binding information in the request. To map media flows to PDP contexts correctly, the UE should also include one or more flow identifiers according to the SDP description. (The authorization token was sent (610) by the P-CSCF/PCF to the UE during SIP signaling, and the flow identifiers were derived by the UE according to the sequence of media flows in the SDP.) A flow identifier only needs a small number of bits, so there will be minimal impact on airlink performance. Specifically, binding information is included in PDP Context Activation/Modification messages to associate the PDP context bearer with policy information. The PDP Configuration Options parameter (an optional parameter signalled in a PDP Context Activation/Modification request) is used for this purpose. Alternatively, another parameter is used, such as a Traffic Flow Template parameter of a PDP context.

The authorization token is unique across PDP contexts associated with an APN, and conforms to the IETF specification on SIP Extensions for Media Authorization.

The flow identifiers identify the IP media flows associated with the SIP session. As described above, flow identifiers may be based on the ordering of media flows in the SDP description. In this case, a flow identifier combined with the authorization token is sufficient to uniquely identify an IP media flow, since flow identifiers are interpreted relative to an authorization token.

In order to allow QoS and policy information to be "pulled" from the PCF, the authorization token may also allow the GGSN to determine the address of the PCF to be used.

The GGSN receives (620) the PDP context request and processes the PDP context request. For example, the GGSN identifies (630) the IP media flow(s) associated with the PDP context bearer using the included binding information, queries (640) the PCF for the policy information to apply to the IP media flow(s) identified by the binding information, and uses received policy information associated with the IP media flow(s) to authorize (650) the bearer, if appropriate in view of the policy information.

SIP session modification can result in changes to the SDP description, such as the addition or deletion of media flows. (For example, in one implementation, when a media flow is deleted, the corresponding "m" line is still be in SDP description, which will be set to "m=0''. The corresponding authorized QoS resource for this deleted flow is set to zero in the PCF. When a new media flow is added, it is added at the end of the existing SDP description.) The P-CSCF/PCF may issue a new authorization token when the SDP description changes. If the resources associated with a PDP context increase as a result of the SIP session modification, the UE sends a PDP context modification with the old (or new) authorization token and flow identifiers.

Having described and illustrated the principles of my invention with reference to certain described embodiments, it will be recognized that the described embodiments can be modified in arrangement and detail without departing from such principles. It should be understood that the programs, processes, or methods described herein are not related or limited to any particular type of computing environment, unless indicated otherwise. Various types of general purpose or specialized computing environments may be used with or perform operations in accordance with the teachings described herein. Elements of the described embodiments shown in software may be implemented in hardware and vice versa.

## Claims

1. A method of requesting resource authorization in a network that includes user equipment and a network node, the method comprising:
transmitting from the user equipment a message including binding information for a session, wherein the binding information for the session includes an authorization token and one or more packet media flow identifiers, each of the one or more packet media flow identifiers in the binding information for the session, in combination with the authorization token in the binding information for the session, identifying a packet media flow within the session to facilitate authorization on a per media flow basis within the session.

2. The method of claim 1 wherein the session has plural packet media flows, and wherein each of the one or more packet media flow identifiers in the binding information for the session, in combination with the authorization token in the binding information for the session,
identifies a different packet media flow of the plural packet media flows within the session.

3. The method of claim 1 or 2 further comprising, before the transmitting, receiving at the user equipment the authorization token.

4. The method of any preceding claim further comprising transmitting an additional message for modifying the authorization, wherein the additional message includes a second authorization token.

5. A method of authorizing resources in a network that includes user equipment and a network node, the method comprising:
for each session of plural sessions, processing in the network node binding information for the session, wherein:
the binding information for the session includes an authorization token and one or more packet media flow identifiers, and
each of the one or more packet media flow identifiers in the binding information for the session, in combination with the authorization token in the binding information for the session, identifies a packet media flow within the session to facilitate authorization on a per media flow basis within the session.

6. The method of claim 5 wherein at least one of the plural sessions has plural packet media flows, and wherein, for each session of the plural sessions, if the session has plural packet media flows, each of the one or more packet media flow identifiers in the binding information for the session, in combination with the authorization token in the binding information for the session, identifies a different packet media flow of the plural packet media flows within the session.

7. The method of claim 5 or 6 wherein the processing comprises requesting policy information indicated by the authorization token.

8. The method of claim 5 or 7 wherein the processing comprises authorizing according to a service-based local policy decision.

9. The method of any one of claims 5 to 8 further comprising, for each session of the plural sessions, transmitting the authorization token to user equipment before the processing.

10. The method of any one of claims 5 to 9 further comprising, for each session of the plural sessions, receiving a message including the binding information before the processing.

11. The method of any one of claims 1, 3, or 10 wherein the message is a PDP context request.

12. The method of any one of claims 1, 3, or 10 wherein the message is a context activation request.

13. The method of any one of claims 1, 3, or 10 wherein the message is a context modification request.

14. The method of any preceding claim wherein the one or more packet media flow identifiers reference a flow order in a session description.

15. The method of any one of claims 1 to 14 wherein a session description is transmitted to the user equipment during session protocol signaling.

16. The method of claim 15 wherein the session protocol is SIP.

17. The method of claim 15 wherein the session description is a SDP description.

18. The method of any preceding claim wherein the packet media flow is an IP media flow.

19. The method of any preceding claim wherein the user equipment is a cellular device.

20. The method of any preceding claim wherein the network node includes a GGSN.

21. The method of any preceding claim wherein the network node includes a SGSN.

22. The method of any preceding claim wherein the network node includes a P-CSCF.

23. The method of any preceding claim wherein the network node includes a policy control function.

24. The method of claim 23 wherein the policy control function generates the authorization token.

25. A computer program comprising computer program code means adapted to perform all the steps of any preceding claim, when said program is run on a computer.

26. A computer program as claimed in claim 25 embodied on a computer-readable medium.

## Patentansprüche

1. Verfahren zum Anfordern einer Betriebsmittelzugangsberechtigung in einem Netzwerk, welches ein Teilnehmergerät und einen Netzwerkknoten umfaßt, wobei das Verfahren umfaßt:
Übertragen einer Nachricht von dem Teilnehmergerät, welche Bindungsinformationen für eine Sitzung umfaßt, wobei die Bindungsinformationen für die Sitzung ein Berechtigungszeichen und eine oder mehrere Paketmediendatenstromkennungen umfaßen, wobei jede der einen oder mehreren Paketmediendatenstromkennungen in den Bindungsinformationen für die Sitzung einen Paketmediendatenstrom in der Sitzung zusammen mit dem Berechtigungszeichen in den Bindungsinformationen für die Sitzung kennzeichnet, um eine Berechtigung auf einer Pro-Mediendatenstrom-Basis in der Sitzung zu erleichtern.

2. Verfahren nach Anspruch 1, wobei die Sitzung mehrere Paketmediendatenströme aufweist, und wobei jede der einen oder mehreren Paketmediendatenstromkennungen in den Bindungsinformationen für die Sitzung einen unterschiedlichen Paketmediendatenstrom aus den mehreren Paketmediendatenströmen in der Sitzung zusammen mit dem Berechtigungszeichen in den Bindungsinformationen für die Sitzung kennzeichnet.

3. Verfahren nach Anspruch 1 oder 2, welches ferner vor dem Übertragen ein Empfangen des Berechtigungszeichens an dem Teilnehmergerät umfaßt.

4. Verfahren nach einem der vorhergehenden Ansprüche, welches ferner ein Übertragen einer zusätzlichen Nachricht zum Ändern der Berechtigung umfaßt, wobei die zusätzliche Nachricht ein zweites Berechtigungszeichen umfaßt.

5. Verfahren zum Berechtigen von Betriebsmitteln in einem Netzwerk, welches Teilnehmergerät und einen Netzwerkknoten umfaßt, wobei das Verfahren umfaßt:
ein Verarbeiten von Bindungsinformationen für die Sitzung im Netzwerkknoten für jede Sitzung der mehreren Sitzungen, wobei:
die Bindungsinformationen für die Sitzung ein Berechtigungszeichen und eine oder mehrere Paketmediendatenstromkennungen umfassen, und
jede der einen oder mehreren Paketmediendatenstromkennungen in den Bindungsinformationen für die Sitzung einen Paketmediendatenstrom in der Sitzung zusammen mit dem Berechtigungszeichen in den Bindungsinformationen für die Sitzung kennzeichnet, um eine Berechtigung auf einer Pro-Mediendatenstrom-Basis in der Sitzung zu erleichtern.

6. Verfahren nach Anspruch 5, wobei wenigstens eine der mehreren Sitzungen mehrere Paketmediendatenströme aufweist, und wobei für jede Sitzung der mehreren Sitzungen jede der einen oder mehreren Paketmediendatenstromkennungen in den Bindungsinformationen für die Sitzung einen unterschiedlichen Paketmediendatenstrom der mehreren Paketmediendatenströme in der Sitzung zusammen mit dem Berechtigungszeichen in den Bindungsinformationen für die Sitzung kennzeichnet, falls die Sitzung mehrere Paketmediendatenströme aufweist.

7. Verfahren nach Anspruch 5 oder 6, wobei das Verarbeiten ein Anfordern von Richtlinieninformationen umfaßt, welches durch das Berechtigungszeichen angezeigt wird.

8. Verfahren nach Anspruch 5 oder 7, wobei das Verarbeiten ein Berechtigen entsprechend einer dienstbasierten lokalen Richtlinienentscheidung umfaßt.

9. Verfahren nach einem der Ansprüche 5 bis 8, welches ferner ein Übertragen des Berechtigungszeichens an Teilnehmergerät vor dem Verarbeiten für jede Sitzung der mehreren Sitzungen umfaßt.

10. Verfahren nach einem der Ansprüche 5 bis 9, welches ferner ein Empfangen einer Nachricht, welche die Bindungsinformationen umfaßt, vor dem Verarbeiten für jede Sitzung der mehreren Sitzungen umfaßt.

11. Verfahren nach einem der Ansprüche 1, 3 oder 10, wobei die Nachricht eine PDP-Kontextanforderung ist.

12. Verfahren nach einem der Ansprüche 1, 3 oder 10, wobei die Nachricht eine Kontextaktivierungsanforderung ist.

13. Verfahren nach einem der Ansprüche 1, 3 oder 10, wobei die Nachricht eine Kontextänderungsanforderung ist.

14. Verfahren nach einem der vorhergehenden Ansprüche, wobei der eine oder die mehreren Paketmediendatenstromkennungen auf eine Datenstromordnung in einer Sitzungsbeschreibung verweisen.

15. Verfahren nach einem der Ansprüche 1 bis 14, wobei eine Sitzungsbeschreibung an das Teilnehmergerät während einer Sitzungsprotokollsignalgebung übertragen wird.

16. Verfahren nach Anspruch 14, wobei das Sitzungsprotokoll SIP ist.

17. Verfahren nach Anspruch 15, wobei die Sitzungsbeschreibung eine SDP-Beschreibung ist.

18. Verfahren nach einem der vorhergehenden Ansprüche, wobei der Paketmediendatenstrom ein IP-Mediendatenstrom ist.

19. Verfahren nach einem der vorhergehenden Ansprüche, wobei das Teilnehmergerät eine zellulare Vorrichtung ist.

20. Verfahren nach einem der vorhergehenden Ansprüche, wobei der Netzwerkknoten ein GGSN umfaßt.

21. Verfahren nach einem der vorhergehenden Ansprüche, wobei der Netzwerkknoten ein SGSN umfaßt.

22. Verfahren nach einem der vorhergehenden Ansprüche, wobei der Netzwerkknoten ein P-CSCF umfaßt.

23. Verfahren nach einem der vorhergehenden Ansprüche, wobei der Netzwerkknoten eine Richtliniensteuerungsfunktion umfaßt.

24. Verfahren nach Anspruch 23, wobei die Richtliniensteuerungsfunktion das Berechtigungszeichen erzeugt.

25. Computerprogramm, welches ein Computerprogrammcodemittel umfaßt, das dazu eingerichtet ist, alle Schritte aus jedem der vorhergehenden Ansprüche auszuführen, wenn das Programm auf einem Computer läuft.

26. Computerprogramm nach Anspruch 25, welches auf einem computerlesbaren Medium verwirklicht ist.

## Revendications

1. Procédé de requête d'autorisation de ressources dans un réseau qui comprend un équipement utilisateur et un noeud de réseau, le procédé consistant à :
transmettre à partir de l'équipement utilisateur, un message comprenant une information de liaison pour une session, dans lequel l'information de liaison pour la session comprend un jeton d'autorisation et un ou plusieurs identifiants de flux de média en mode paquet, chacun des un ou plusieurs identifiants de flux de média en mode paquet dans l'information de liaison pour la session, en combinaison avec le jeton d'autorisation dans l'information de liaison pour la session, identifiant un flux de média en mode paquet dans la session afin de faciliter l'autorisation sur la base de chaque flux de média dans la session.

2. Procédé selon la revendication 1, dans lequel la session a plusieurs flux de média en mode paquet et dans lequel chacun des un ou plusieurs identifiants de flux de média en mode paquet dans l'information de liaison pour la session, en combinaison avec le jeton d'autorisation dans l'information de liaison pour la session, identifie un flux de média en mode paquet différent parmi la pluralité des flux de média en mode paquet dans la session.

3. Procédé selon la revendication 1 ou la revendication 2, comprenant en outre, avant la transmission, la réception du jeton d'autorisation au niveau de l'équipement utilisateur.

4. Procédé selon une quelconque revendication précédente, consistant en outre à transmettre un message supplémentaire pour modifier l'autorisation, dans lequel le message supplémentaire comprend un second jeton d'autorisation.

5. Procédé d'autorisation de ressources dans un réseau qui comprend un équipement utilisateur et un noeud de réseau, le procédé consistant à :
traiter l'information de liaison pour la session dans le noeud de réseau, pour chaque session parmi une pluralité de sessions, dans lequel :
l'information de liaison pour la session comprend un jeton d'autorisation et un ou plusieurs identifiants de flux de média en mode paquet, et
chacun des un ou plusieurs identifiants de flux de média en mode paquet dans l'information de liaison pour la session, en combinaison avec le jeton d'autorisation dans l'information de liaison pour la session, identifie un flux de média en mode paquet dans la session afin de faciliter l'autorisation sur la base de chaque flux de média dans la session.

6. Procédé selon la revendication 5, dans lequel au moins une session parmi la pluralité de sessions a plusieurs flux de média en mode paquet et dans lequel, pour chaque session de la pluralité de sessions, si la session a plusieurs flux de média en mode paquet, chacun des un ou plusieurs identifiants de flux de média en mode paquet dans l'information de liaison pour la session, en combinaison avec le jeton d'autorisation dans l'information de liaison pour la session, identifie un flux de média en mode paquet différent parmi la pluralité des flux de média en mode paquet dans la session.

7. Procédé selon la revendication 5 ou 6, dans lequel le traitement comprend la requête d'information de politique indiquée par le jeton d'autorisation.

8. Procédé selon la revendication 5 ou 7, dans lequel le traitement comprend l'autorisation selon une décision de politique locale dépendant de service.

9. Procédé selon l'une quelconque des revendications 5 à 8, consistant en outre à transmettre le jeton d'autorisation à l'équipement utilisateur avant le traitement, pour chaque session de la pluralité de sessions.

10. Procédé selon l'une quelconque des revendications 5 à 9, consistant en outre à recevoir un message comprenant l'information de liaison avant le traitement, pour chaque session de la pluralité de sessions.

11. Procédé selon l'une quelconque des revendications 1, 3 ou 10, dans lequel le message est une requête de contexte PDP.

12. Procédé selon l'une quelconque des revendications 1, 3 ou 10, dans lequel le message est une requête d'activation de contexte.

13. Procédé selon l'une quelconque des revendications 1, 3 ou 10, dans lequel le message est une requête de modification de contexte.

14. Procédé selon une quelconque revendication précédente, dans lequel un ou plusieurs identifiants de flux de média en mode paquet désignent un ordre de flux dans une description de session.

15. Procédé selon l'une quelconque des revendications 1 à 14, dans lequel une description de session est transmise à l'équipement utilisateur au cours de la signalisation du protocole de session.

16. Procédé selon la revendication 15, dans lequel le protocole de session est SIP.

17. Procédé selon la revendication 15, dans lequel la description de session est une description SDP.

18. Procédé selon une quelconque revendication précédente, dans lequel le flux de média en mode paquet est un flux de média IP.

19. Procédé selon une quelconque revendication précédente, dans lequel l'équipement utilisateur est un dispositif cellulaire.

20. Procédé selon une quelconque revendication précédente, dans lequel le noeud de réseau comprend une passerelle GGSN.

21. Procédé selon une quelconque revendication précédente, dans lequel le noeud de réseau comprend une passerelle SGSN.

22. Procédé selon une quelconque revendication précédente, dans lequel le noeud de réseau comprend un P-CSCF.

23. Procédé selon une quelconque revendication précédente, dans lequel le noeud de réseau comprend une fonction de contrôle de politique.

24. Procédé selon la revendication 23, dans lequel la fonction de contrôle de politique engendre le jeton d'autorisation.

25. Programme informatique comprenant des moyens de codes de programme informatique adaptés pour exécuter toutes les étapes d'une quelconque revendication précédente, quand ledit programme est exécuté sur un ordinateur.

26. Programme informatique selon la revendication 25, réalisé sur un support pouvant être lu par un ordinateur.
